(19) Europäisches Patentamt
European Patent Office
Office européen des brevets

(11) Veröffentlichungsnummer: **0 269 838 B1**

(12) # EUROPÄISCHE PATENTSCHRIFT

(45) Veröffentlichungstag der Patentschrift: **24.03.93**

(51) Int. Cl.[5]: **C08K 5/00**, C08G 18/40, D01F 6/70

(21) Anmeldenummer: **87115567.7**

(22) Anmeldetag: **23.10.87**

Die Akte enthält technische Angaben, die nach dem Eingang der Anmeldung eingereicht wurden und die nicht in dieser Patentschrift enthalten sind.

(54) **Gegen Umwelteinflüsse stabilisierte Elasthanfasern.**

(30) Priorität: **04.11.86 DE 3637509**

(43) Veröffentlichungstag der Anmeldung:
**08.06.88 Patentblatt 88/23**

(45) Bekanntmachung des Hinweises auf die Patenterteilung:
**24.03.93 Patentblatt 93/12**

(84) Benannte Vertragsstaaten:
**DE ES FR GB IT NL**

(56) Entgegenhaltungen:
**EP-A- 0 137 408**
**DE-A- 1 912 179**

(73) Patentinhaber: **BAYER AG**

**W-5090 Leverkusen 1 Bayerwerk(DE)**

(72) Erfinder: **Kausch, Michael, Dr.**
**Semmelweisstrasse 151**
**W-5000 Köln 80(DE)**
Erfinder: **Buysch, Hans-Josef, Dr.**
**Bradenburger Strasse 28**
**W-4150 Krefeld(DE)**
Erfinder: **Schröer, Hans, Dr.**
**An der Windmühle 3**
**W-4047 Dormagen(DE)**
Erfinder: **Süling, Carlhans, Dr.**
**Carl-Leverkus-Strasse 10**
**W-5068 Odenthal(DE)**

EP 0 269 838 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft Elasthanfasern, die durch eine synergistische Stabilisator-Kombination von

a) hochalkylierten, phenolischen Antioxidantien der Struktur I

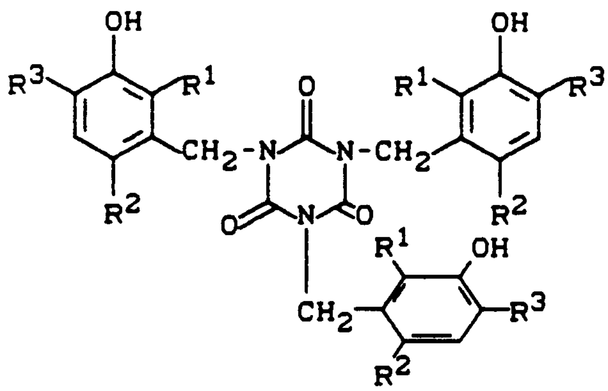

I

worin

$R^1$, $R^2$ und $R^3$ $C_{1-3}$-Alkylreste und $R^3$ außerdem $C_{4-6}$-Alkylreste darstellen

und

b) oligomeren, (cyclo)aliphatischen Phosphorigsäureestern (oligomeren Phosphiten), die durch Umsetzung von Pentaerythrit, Perhydrobisphenol A und gegebenenfells einem Monoalkohol, mit monomeren Trialkyl- oder Triarylphosphiten erhalten werden, wobei die oligomeren Phosphite Gemische von oligomeren Phosphiten sind, denen überwiegend die Struktur

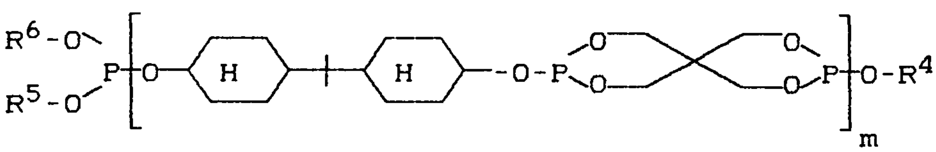

zukommt,

worin

$R^4$, $R^5$ und $R^6$ gleich oder verschieden sein können und $C_{1-18}$-Alkyl, ein Rest der Struktur

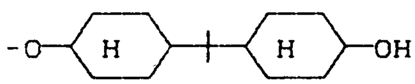

,

$R^4$ außerdem einen Rest der Struktur

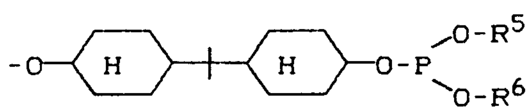

$R^5$ und $R^6$ außerdem zusammen einen Rest der Struktur

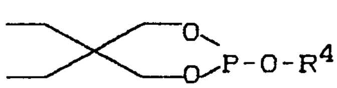

darstellen und
m eine ganze Zahl von 2 bis 20 bedeutet,
und zur Herstellung der Phosphitstabilisatoren b) die Komponenten
monomeres Trialkyl- oder Triarylphosphit,
Pentaerythrit,
Perhydrobisphenol und gegebenenfalls
aliphatischer Monoalkohol im Molverhältnis 1:0,75 bis 1,3:1,6 bis 3,2:0 bis 0,5 umgesetzt werden
und die Konzentration des phenolischen Antioxydans a) zwischen 0,5 und 2 Gew.-%
und die Konzentration des Phosphitstabilisators b) zwischen 1 und 5 Gew.-%, jeweils bezogen auf das Fasermaterial, liegt,
gegen schädigende Einflüsse der Umwelt, besonders gegen Sonnenlicht und Verbrennungsgase geschützt sind.

Unter Elasthanfäden werden Fäden verstanden, die zu mindestens 85 Gew.-% aus segmentierten Polyurethanen bestehen. Die elastischen und mechanischen Eigenschaften werden dadurch erreicht, daß Polyharnstoffpolyurethane aus aromatischen Diisocyanaten verwendet werden. Derartige Elasthane werden durch Verspinnen von Lösungen nach dem Naßspinn- oder bevorzugt nach dem Trockenspinnverfahren hergestellt. Als Lösungsmittel eignen sich polare Lösungsmittel, z.B. Dimethylsulfoxid, N-Methylpyrrolidon und bevorzugt Dimethylformamid oder Dimethylacetamid.

Elasthane müssen gegen Licht und Schadgas stabilisiert werden und enthalten aus diesem Grund Stabilisatoren, die entweder der Spinnlösung als Additiv zugesetzt oder in das segmentierte Polyurethan eingebaut werden. Werden Additive eingesetzt, so sollen diese unter den Spinnbedingungen nicht flüchtig sein.

Zur Verbesserung der Beständigkeit der Elasthane wurden schon verschiedene Stabilisatoren und Stabilisatorkombinationen aus phenolischen Antioxidantien und Phosphiten vorgeschlagen.

Die Stabilitäten dieser beschriebenen Elasthanfäden genügen jedoch nicht den heutigen technischen Anforderungen, denn einerseits wird von den verwendeten stabilisierende Verbindungen gefordert, daß die mechanischen und elastischen Eigenschaften nicht negativ beeinflußt werden, andererseits dürfen alle Verarbeitungsschritte von der Fadenherstellung bis zum Fertigartikel wie Miederwaren oder Badebekleidung die Wirksamkeit der verwendeten Stabilisatorsysteme nicht mindern.

Nach Jap. P.S. 56-107009 wird die Elasthanlösung mit einem phenolischen Antioxidans der Struktur II

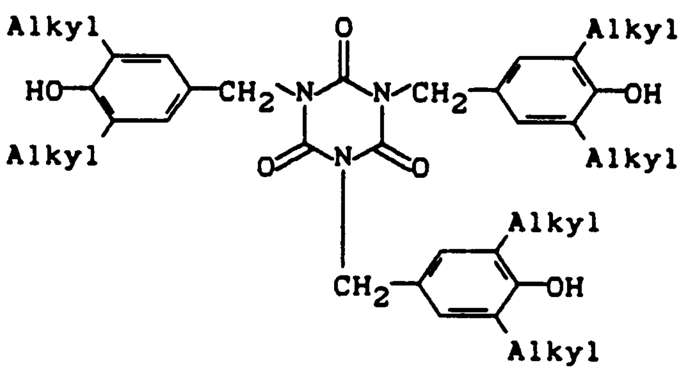

II

versetzt und erst nach Verspinnen die Faser mit einem ein monomeres aromatisches oder aliphatisches Phosphit enthaltenden Öl behandelt. Dies ist eine sehr unzuverlässige Stabilisierungsmethode, da Aufbringung und Haftung der Phosphite auf der Oberfläche vielfältigen Störungen unterworfen ist.

US-A 3 386 942 beschreibt Stabilisatorkombinationen aus mit langkettigen aliphatischen Resten in 2,6-Stellung substituierten p-Kresolen und Phosphiten der Struktur

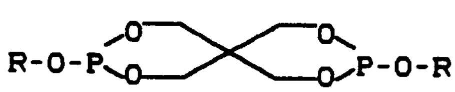

und

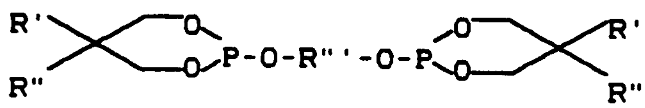

worin R-R'' aliphatische $C_{1-20}$-Reste und R''' Alkylen-, Cycloalkylen- oder Alkylen-Arylenreste mie 2 bis 20 C-Atomen darstellen und Thiodipropionsäureestern. Um eine befriedigende Wirkung zu erzielen, müssen diese Kombinationen in hohen Dosen bis zu 7 Gew.-% bezogen auf die Faser eingesetzt werden, was insbesondere bei Kleidungsstücken als nicht unbedenklich anzusehen ist. Darüber hinaus genügt diese Stabilisierung nicht mehr den heutigen Ansprüchen und führt bei UV-Belichtung sogar zu beschleunigter Braunfärbung.

Weniger aufwendig und effizienter ist die in US-PS 3 573 251 vorgeschlagene Stabilisierung mit Antioxidantien der Formel

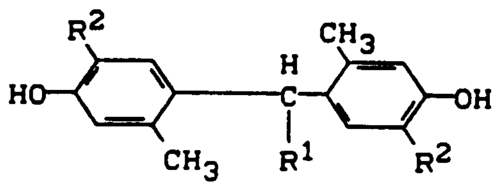

oder

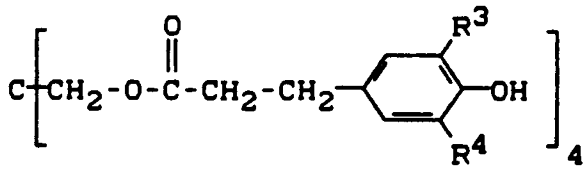

worin Reste $R^1$ bis $R^4$ im wesentlichen Alkylgruppen darstellen
und Phosphiten der Struktur

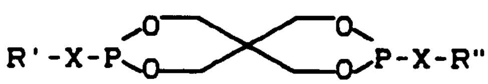

oder

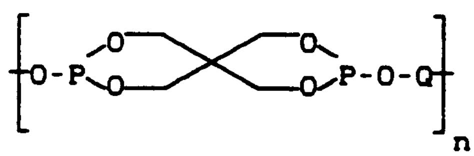

worin X O oder S, R' und R'' Alkylgruppen,
Q

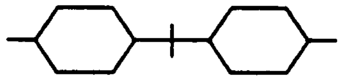

und

n ein Molgewicht von mindestens 1000 symbolisiert.

Diese Stabilisierung wird jedoch, wie in EP-A 137 408 gezeigt, übertroffen von der Kombination aus Aryl-Alkyl-Phosphiten, die im wesentlichen das Strukturelement

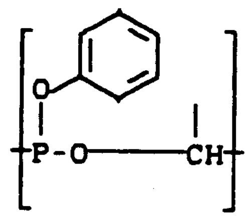

enthalten und Antioxidantien, die durch Alkylierung von p-Kresol mit Dicyclopentadien und Isobutylen gewonnen werden oder hochalkylierten phenolischen Antioxidantien der Struktur I.

Die Vergleichsversuche in EP-A 137 408 mit Phosphiten, die Pentaerythritstruktur (Weston 618) aufweisen und obigen Antioxidantien zeigen deutlich schlechtere Ergebnisse als die mit in der EP-A 137 408 beanspruchten Aryl-alkyl-phosphiten aus Phenol und sekundären Alkoholen.

Überraschenderweise wurde nun gefunden, daß Stabilisatorkombinationen aus Antioxidantien (a) der Struktur I und Umsetzungsprodukten (b) von aliphatischen und aromatischen Monophosphiten mit Pentaerythrit und Perhydrobisphenol A, die Kombinationen der EP-A 1137 408 übertreffen.

Nach den in EP-A 137 408 veröffentlichten Tests war nicht zu erwarten, daß Phosphite mit Pentaerythritstrukturen gleichwertigen oder gar überlegene Kombinationen darstellen würden.

Gegenstand der Erfindung sind Elasthanfäden und -fasern, die ein phenolisches Antioxidans und einen Phosphitstabilisator enthalten, dadurch gekennzeichnet, daß in dem Stabilisatorgemisch

a) das phenolische Antioxidans der Formel I entspricht

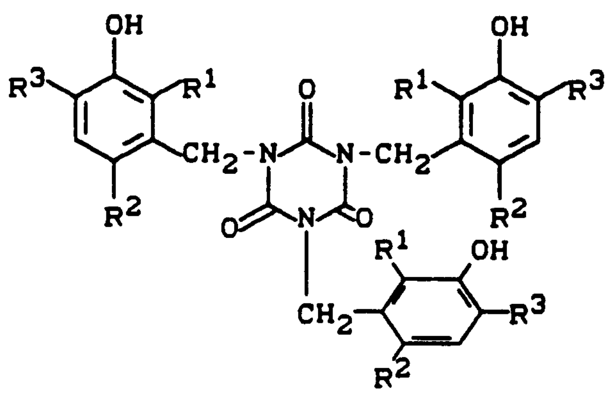

I

worin

$R^1$, $R^2$ und $R^3$ $C_{1-3}$-Alkylreste und $R^3$ außerdem $C_{4-6}$-Alkylreste darstellen

und

b) die Phosphitstabilisatoren oligomere, (cyclo)aliphatische Phosphorigsäureester sind, die durch Umesterung von Pentaerythrit, Perhydrobisphenol A, gegebenenfalls in Gegenwart eines aliphatischen Monoalkohols mit 6 bis 18 C-Atomen, mit monomeren Trialkyl- oder Triarylphosphiten erhalten werden, wobei die oligomeren Phosphite Gemische von oligomeren Phosphiten sind, denen überwiegend die Struktur

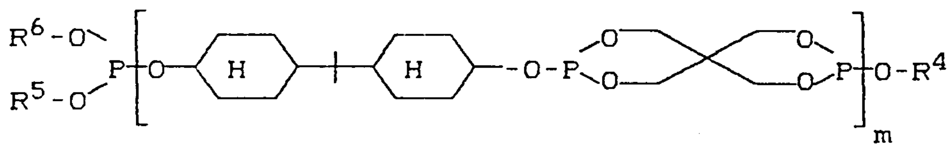

zukommt,
worin
$R^4$, $R^5$ und $R^6$ gleich oder verschieden sein können und $C_{1-18}$-Alkyl, ein Rest der Struktur

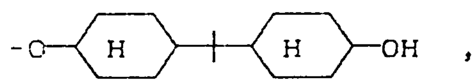

$R^4$ außerdem einen Rest der Struktur

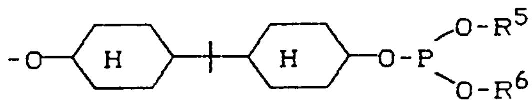

$R^5$ und $R^6$ außerdem zusammen einen Rest der Struktur

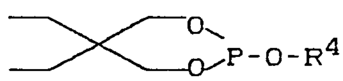

darstellen und
m eine ganze Zahl von 2 bis 20 bedeutet,
und zur Herstellung der Phosphitstabilisatoren b) die Komponenten
monomeres Trialkyl- oder Triarylphosphit,
Pentaerythrit,
Perhydrobisphenol und gegebenenfalls
aliphatischer Monoalkohol im Molverhältnis 1:0,75 bis 1,3:1,6 bis 3,2:0 bis 0,5 umgesetzt werden
und die Konzentration des phenolischen Antioxydans a) zwischen 0,5 und 2 Gew.-%
und die Konzentration des Phosphitstabilisators b) zwischen 1 und 5 Gew.-%, jeweils bezogen auf das Fasermaterial, liegt.

Geeignete Antioxidantien der Struktur I sind solche, in denen $R^1$, $R^2$ und $R^3$ $C_{1-3}$-Alkylreste, $R^3$ außerdem $C_{4-6}$-Alkyreste darstellen, bevorzugt sind solche mit $R^1$ und $R^2$ Methyl und $R^3$ Methyl, Ethyl, Isopropyl, Cyclohexyl, besonders bevorzugt die Verbindung mit $R^1$ und $R^2$ Methyl und $R^3$ tert. Butyl; genannt seien beispielesweise:
2,4,6-Tris-(2,4,6-trimethyl-3-hydroxybenzyl)-isocyanurat,
2,4,6-Tris-(4-ethyl-2,6-dimethyl-3-hydroxbenzyl)-isocyanurat,
2,4,6-Tris-(4-isopropyl-2,6-dimethyl-3-hydroxybenzyl)-isocyanurat,
2,4,6-Tris-(4-cyclohexyl-2,6-dimethyl-3-hydroxybenyl)-isocyanurat, besonders aber
2,4,6-Tris-(4-tert.-butyl-2,6,-dimethyl-4-hydroxybenzyl)-isocyanurat.

Geeignete Umsetzungsprodukte von aromatischen und aliphatischen Monophosphiten mit Pentaerythrit und Perhydrobisphenol A erhält man, indem man die Komponenten Trialkyl- oder Triphenylphosphit, Pentaerythrit, Perhydrobisphenol A und gegebenenfalls einen Monoalkohol in den erforderlichen Molverhältnisses miteinander umestert und dabei den Alkohol (aus dem Trialkylphosphit) oder Phenol (aus dem Triphenylphosphit) durch Destillation gegebenenfalls im Vakuum bis zu einer Sumpftemperatur von maximal 200° aus dem Gleichgewicht entfernt.

Zweckmäßig setzt man zuerst Pentaerythrit mit dem Phosphit um unter Abdestillieren einer ersten Fraktion von etwa 2 Mol Hydroxyverbindung pro Mol Phosphit, dann gibt man Perhydrobisphenol A hinzu und destilliert während der Umsetzung weitere Hydroxyverbindung ab bis zu einer Sumpftemperatur von vorzugsweise 180° besonders bevorzugt 170°.

Soll ein $C_{6-18}$-Monoalkohol mitverwendet werden, so wird dieser vorzugsweise zugegeben, nachdem die zweite Fraktion der Hydroxyverbindung abdestilliert wurde. Nach Zugabe dieses Monoalkohols wird eine dritte Fraktion der Hydroxyverbindung aus dem ursprünglich eingesetzten Phosphit destillativ bis zu einer Sumpftemperatur von vorzugsweise 180°, besonders bevorzugt 170° gegebenenfalls im Vakuum entfernt.

Arbeiten im Vakuum ist besonders dann erforderlich, wenn mit Triphenylphosphit gearbeitet wird, oder wenn im Endstadium der Umesterung die letzten Reste eines niederen Alkohols aus dem Reaktionsgemisch entfernt werden sollen.

Die genannten Komponenten werden in folgenden Molverhältnissen miteinander umgesetzt:

| Komponenten | Molverhältnisse im allgemeinen | besser | bevorzugt | besonders bevorzugt |
|---|---|---|---|---|
| Perhydrobisphenol A | 1 | 1 | 1 | 1 |
| Pentaerythrit | 0,5-2,0 | 0,66-1,5 | 0,75-1,3 | 0,80-1,2 |
| Phosphit | 1,3-4,0 | 1,5-3,5 | 1,6-3,2 | 1,7-2,8 |
| Monoalkohol | 0-1,5 | 0-1,0 | | 0-0,3 |

Geeignete Phosphite sind Triphenylphosphit und Trialkylphosphite aus $C_{1-4}$-Alkoholen, besonders bevorzugt Trimethyl- und Triethylphosphit.

Geeignete Monoalkohole sind aliphatische Alkohole mit 6 bis 18 C-Atomen, besonders primäre Alkohole. Genannt seien beispielsweise Isooctanol, Decanol, Dodecanol, Tetradecanol und Octadecanol.

Naturgemäß entstehen bei dieser Synthese durch Umesterung keine einheitlichen Verbindungen, sondern Gemische von oligomeren Phosphiten, denen überwiegend die folgende Struktur III zukommt:

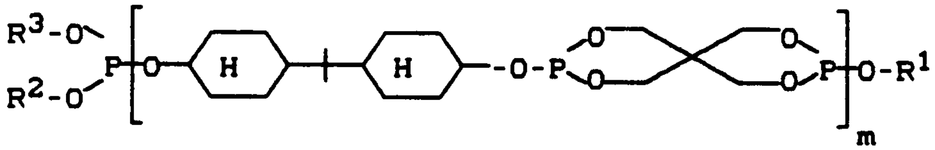

(III)

worin

$R^1$, $R^2$ und $R^3$ gleich oder verschieden sein können und $C_{1-18}$-Alkyl, Aryl, ein Rest der Struktur IV, $R^1$ außerdem einen Rest

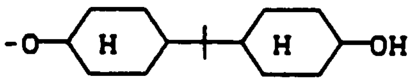

IV

der Struktur V,

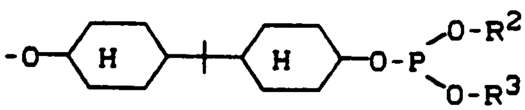

V

$R^2$ und $R^3$ außerdem zusammen einen Rest der Struktur VI darstellen und

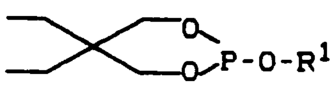

VI

m eine ganze Zahl von 1 bis 20 bedeutet.

Bevorzugt stellen dar: $R^1$, $R^2$ und $R^3$ Methyl, Ethyl, Propyl, Butyl, Isooctyl, Decyl, Dodecyl, Tetradecyl, Octadecyl, $R^1$ außerdem den Rest IV und V und $R^2$ und $R^3$ zusammen den Rest VI, m = 2 bis 15.

Besonders bevorzugt sind $R^1$, $R^2$ und $R^3$ Methyl, Ethyl, Octadecyl (Stearyl), $R^1$ außerdem Rest IV und V und $R^2$ und $R^3$ zusammen außerdem Rest VI, m = 2 bis 10. Solche Verbindungen können auch beispielsweise analog US-A 3 053 878 hergestellt werden.

Die Konzentration des Phosphitstabilisators kann zwischen 0,5 und 10 Gew.-%, bezogen auf das Fasermaterial liegen. Die bevorzugte Phosphitkonzentration liegt üblicherweise im Bereich von 1 bis 5 %, besonders bevorzugt zwischen 1 und 3 %. Die Konzentration des phenolischen Antioxidans, das zur Erzielung der synergistischen Wirkung notwendig ist, kann im Bereich von 0,2 bis 5 Gew.-%, vorzugsweise 0,5 bis 2 Gew.-% bezogen auf das Fasermaterial liegen. Bevorzugt sind Kombinationen, in denen die Konzentrationen des phenolischen Antioxidans a) in der synergistisch wirksamen Stabilisatorkombination ca. 15 bis 70 Gew.-%, vorzugsweise $16,\overline{6}$ bis 50 Gew.-% ausmachen.

Die erfindungsgemäße Kombination von stabilisierend wirkenden Verbindungen kann während der Synthese oder besser nach Abschluß der Synthese der Polyharnstoffpolyurethanlösung zugesetzt werden.

Die Herstellung der Polyharnstoff-Polyurethane erfolgt nach bekannten Verfahrensweisen. Besonders bewährt hat sich der synthetische Aufbau der Faserrohstoffe nach dem Prepolymerverfahren, wobei in der 1. Verfahrensstufe ein langkettiges Diol im Lösungsmittel oder in der Schmelze mit einem Diisocyanat zu einem Prepolymer so umgesetzt wird, daß das Reaktionsprodukt Isocyanatendgruppen enthält.

Als Diole sind einerseits Polyesterdiole und andererseits Polyetherdiole bevorzugt. Weiterhin kommen Mischungen aus Polyester- und Polyetherdiolen in Frage. Die Diole haben im allgemeinen ein Molekulargewicht von 1000 bis 6000.

Als Polyesterdiole sind z.B. Dicarbonsäurepolyester geeignet, die sowohl mehrere Alkohole wie auch mehrere Carbonsäuren enthalten können. Besonders geeignet sind Mischpolyester aus Adipinsäure, Hexandiol und Neopentylglykol im molaren Verhältnis 1:0,7:0,43. Die Polyester haben bevorzugt ein Molekulargewicht von 1000 bis 4000.

Als Polyetherdiole eignen sich z.B. Polytetramethylenoxiddiole, vorzugsweise mit Molekulargewichten von 1000 bis 3000.

Es können auch Mischungen von Polyester- oder Polyetherdiolen mit Diolen, die tertiäre Aminogruppen enthalten, eingesetzt werden.

Bei der Synthese der Elasthanrohstoffe werden die üblichen aromatischen Diisocyanate gegebenenfalls in Abmischung mit geringen Anteilen von aliphatischen Diisocyanaten verwendet. Besonders brauchbare Ergebnisse werden mit den nachstehenden Diisocyanaten erhalten:

2,4-Toluylendiisocyanat sowie entsprehende Isomerengemische, insbesondere 4,4'-Diphenylmethandiisocyanat bzw. entsprechende Isomerengemische mit untergeordneten Mengen an 2,4'- und/oder 2,2'-Isomeren. Selbstverständlich ist es möglich, Mischungen von aromatischen Diisocyanaten zu verwenden. Als Mischungskomponenten sind weiterhin beispielsweise nachstehende (cyclo)aliphatische Diisocyanate geeignet:
Hexamethylendiisocyanat, Isophorondiisocyanat, Dicyclohexylmethandiisocyanat oder trans-1,4-Cyclohexandiisocyanat.

Eine andere, besonders günstige Ausführungsform der Synthese von erfindungsgemäßen Elasthanrohstoffen besteht darin, Polyester- und Polyetherpolyurethanprepolymere zu mischen und anschließend in bekannter Weise zu Polyharnstofffpolyurethanen umzusetzen. Das für den jeweiligen technischen Zweck günstige Mischverhältnis von Polyester- und Polyetherdiolen läßt sich durch Vorversuche einfach ermitteln.

Bei der Polyharnstoffpolyurethansynthese werden die gewünschten Harnstoffgruppen durch eine Kettenverlängerungsreaktion in die Makromoleküle eingeführt. Üblicherweise werden die in der Prepolymerstufe synthetisierten Makro-diisocyanate in Lösung mit Diaminen umgesetzt, z.B. Ethylendiamin, 1,2-Propylendiamin, Tetramethylendiamin, 1,3-Cyclohexandiamin, Isophorondiamin sowie Gemischen dieser Diamine, insbesondere Gemische mit Ethylendiamin als Hauptkomponente.

Durch die Verwendung einer geringen Menge an Monoaminen, z.B. Diethylamin oder Dibutylamin, während der Kettenverlängerung kann das gewünschte Molekulargewicht eingestellt werden.

Die Kettenverlägerung selbst kann unter Verwendung von $CO_2$ als Retardierungsmittel ausgeführt werden.

Eine Mischung aus Polyester- und Polyetherpolyurethanharnstoffen kann auch nach Abschluß der Elasthan-Synthese noch durchgeführt werden.

Zusätzlich zu der beschriebenen synergistischen Mischung aus phenolischem Antioxidans und Phosphitstabilisator können die erfindungsgemäßen Elasthanfasern noch eine Vielzahl anderer Additive, die den verschiedensten Zwecken dienen können, enthalten. Genannt seien z.B. weitere Antioxidantien, Lichtschutzmittel, Schönungsfarbstoffe, Pigmente, Färbeadditive, Antistatika, abhäsiv wirksame Zusätze wie Magnesium-, Calcium-, Lithium-, Zink- und/oder Aluminiumstearate, usw. solange diese nicht einen antagonistischen Effekt mit der erfindungsgemäßen Stabilisatorkombination aufweisen, was durch einfache Versuche feststellbar ist.

Herstellung der Phosphorigsäureester

Beispiel 1: Herstellung von Stabilisator A

36,6 g (0,27 Mol) Pentaerythrit und 89,6 g (0,54 Mol) Triethylphosphit wurden miteinander umgesetzt, wobei unter Normaldruck bis zu einer Sumpftemperatur von 170° 44 g Ethanol über eine Kolonne abdestillierten. Dann gab man 72 g (0,3 Mol) Perhydrobisphenol A hinzu und destillierte bis zu einer Sumpftemperatur von 170° weitere 20 g Ethanol ab. Man erhält 130 g eines farblosen spröden Harzes.

Beispiel 2: Herstellung von Stabilisator B (Vergleich)

Ein Gemisch von 272 g (2,0 Mol) Pentaerythrit und 1240 g (4,0 Mol) Triphenylphosphit wurden unter Rühren im Vakuum erhitzt. Bis zu einer Sumpftemperatur von 170° wurden bei 13 mbar 749 g Phenol abdestilliert. Nach Zugabe von 530 g (2,2 Mol) Perhydrobisphenol A werden weitere 358 g Phenol

abgetrennt bis zu einer Sumpftemperatur von 170° bis 1,0 mbar. Man erhält 946 g eines farblosen spröden Harzes.

Beispiel 3: Stabilisator C

27,7 g (0,2 Mol) Pentaerythrit und 66,4 g (0,4 Mol) Triethylphosphit wurden, wie vorstehend beschrieben, umgesetzt, wobei 31 g Ethanol abgespalten wurden. Nach Zugabe von 48 g (0,2 Mol) Perhydrobisphenol A wurden weitere 20 g und nach Zugabe von 2.78 g (0.01 Mol) Stearylalkohol noch 3 g Ethanol überdestilliert. Man erhält 91 g eines farblosen Harzes.

Beispiel 4: Stabilisator D

Wurde analog zu Beispiel 3 hergestellt aus 0,2 Mol Perhydrobisphenol 0,01 Mol Stearylalkohol, 0,2 Mol Pentaerythrit und 0,4 Mol Triethylphopshit.

Beispiel 5

5.1 Herstellung der stabilisierten Elasthane

10 kg eines Polytetramethylenetherglykols vom Moleculargewicht 2000 und einer OH-Zahl von 56 wurden mit 3,07 kg Dimethylacetamid verdünnt. In die auf 25° C temperierte Mischung gab man 2,27 kg Diphenylmethandiisocyanat und ließ bei 50 bis 55° C 60 bis 90 Minuten lang reagieren, bis der NCO-Gehalt des Prepolymeren einen Wert von 2,65 % (bezogen auf Feststoff) hatte.

220 g Ethylendiamin und 23 g Diethylamin als Kettanabbrecher wurden in 37,2 kg Dimethylacetamid gelöst, in einem Kessel vorgelegt und mit 250 g festem $CO_2$ versetzt, so daß sich eine Carbamatsuspension bildete. Zu dieser Suspension wurden unter starkem Rühren 15,3 kg der Prepolymerlösung zugegeben. Man erhielt eine homogene, klare, farblose Elastomerlösung mit einem Feststoffgehalt von 22 Gew.-% und einer Lösungsviskosität von 70 Pa.s. Die inherente Viskosität des Polymeren betrug 1,2 dl/g (5 g/l Dimethylacetamid bei 30° C).

5,2 Erfindungsgemäße Stabilisierung und Vergleiche

Zu der viskosen Polymerlösung 5.1 wurden, bezogen auf PU-Feststoff, 4 Gew.-% Titandioxid, 0,3 % Mg-Stearat, 1 % des Silikonöles Baysilon M 100 (Bayer AG) sowie 5 % eines Färbeadditives, das durch Umsetzung von N-tert.-Pentyldiisopropanolamin mit Dicyclohexylmethandiisocyanat im Verhältnis 1:0,98 hergestellt wurde, zugesetzt.

Die Lösung wurde in vier gleiche Teile geteilt und diesen die nachfolgend beschriebenen Stabilisatorkombinationen zugesetzt. Beispiel 5 stellt dabei die erfindungsgemäße Kombination dar, während es sich bei den Versuchen 6 bis 8 um Vergleichsbeispiele handelt:

| | |
|---|---|
| Beispiel 5 | 1 % Cyanox® 1790 (erfindungsgemäß) |
| | 1 % Stabilisator B |
| Beispiel 6 | 1 % Wingstay® L (Vergleich) |
| | 1 % Weston DHOP |
| Beispiel 7 | 1 % Wingstay® L (Vergleich) |
| | 1 % Stabilisator B |
| Beispiel 8 | 1 % Cyanox® 1790 (Vergleich) |
| | 1 % Weston DHOP |
| Weston® DHOP = | Decaphenylheptakis(dipropylenglykol)octaphosphit |
| Wingstay® L = | Kondensationsprodukt aus p-Kresol, Dicyclopentadien und Isobuten |
| Cyanox® 1790 = | 2,4,6-tris-(2,6-dimethyl)-4-t-butyl-3-hydroxybenzyl)isocyanurat |
| Stabilisator B = | siehe Beispiel 2 |

Die nach den Beispielen hergestellten Lösungen wurden jeweils auf herkömmliche Art zu einem multifilen Faden vom Gesamttiter 160 dtex trocken versponnen.

Die Fäden wurden anschließend zu einem Strickschlauch verstrickt und Tests auf Schadgasbeständigkeit unterzogen.

Diese Tests bestanden einerseits in der Prüfung auf Stickoxidechtheiten nach DIN 45 025 (in Tabelle 1 gekennzeichnet, mit 1 x NO für eine leichte Beanspruchung und mit 3 x NO für eine schwere Beanspruchung) andererseits in einer Prüfung der Stickoxidechtheit bei erhöhten Temperaturen.

In Anlehnung an die ISO-Norm 105-G02 wurden hierzu die Prüflinge auf einem drehbaren Gestell in eine auf 60° beheizte Kammer eingebracht, in die dann mittels einer Infektionsspritze soviel $NO_2$-Gas/Luft-Gemisch gespritzt wurde, daß in des Kammer eine $NO_2$-Konzentration von 600 ppm entstand.

Die Prüflinge wurden nun 90 Minuten in dieser schadgashaltigen Atmosphäre durch Drehen des Gestells (50 U/min) bewegt. Danach wurden sie entnommen, durch Waschen mit einer 1,3 %igen Harnstofflösung von anhaftendem $NO_2$ befreit und an der Luft getrocknet. Die Ergebnisse dieses Tests sind in den Tabellen durch "$NO_2$ bei 60°" gekennzeichnet.

Die jeweilige Farbänderung der begasten Proben zum Ausgangsmaterial wurde mit dem Graumaßstabe DIN 54 001 auf der Außenseite bewertet, wobei die Zahl praktisch keiner und die Zahl 1 einer starken Farbänderung entspricht.

Die Zahlen in eckiger Klammer geben die Reihenfolge der Bewertung an von: 1 = beste Probe bis 4 = schlechteste Probe.

**Tabelle 1:** Schadgasbeständigkeit

| Beispiel | 1 x NO | | 3 x NO | | $NO_2$ bei 60° | |
|---|---|---|---|---|---|---|
| 5 erfindungsgemäß | 4 (-5) | [1] | 3-4 | [1] | 2 (-3) | [1] |
| 6 Vergleich | 4 | [2] | 3 (-4) | [3] | 1-2 | [3] |
| 7 Vergleich | 4 | [2] | 3-4 | [1] | 1 (-2) | [4] |
| 8 Vergleich | 3-4 | [4] | 3 | [4] | 2 (-3) | [1] |

Beispiele 9 bis 14

AA.)

Ein Polyester mit endständigen Hydroxylgruppen und einem mittleren Molekulargewicht von 2000 und einer OH-Zahl von 56 wurde durch Umsetzung von 10 kg Adipinsäure mit 8,1 kg Hexandiol und 7,1 kg Neopentylglykol hergestellt.

BB.)

10 kg des Polyesters nach AA.) wurden zusammen mit 190 g Methyl-azaheptan-diol-2,6, 2,6 kg 4,4-Diphenylemthandiisocyanat und 3,2 kg Dimethylacetamid unter Rühren 100 min auf 50 bis 54°C erwärmt, bis der NCO-Gehalt des Prepolymeren 2,66 Gew.-% (bezogen auf Feststoff) betrug. 245 g Ethylendiamin wurden in 43,45 kg Dimethylacetamid gelöst, in einem Kessel vorgelegt und mit 270 g festem $CO_2$ versetzt, so daß sich eine Carbamatsuspension bildete. Zu dieser Suspension wurden unter intensivem Rühren 16 kg der Prepolymerlösung gegeben. Man erhielt eine homogene klare Elastomerlösung mit einem Feststoffgehalt von 22 Gew.-% und einer Lösungsviskosität von 92,6 Pa.s. Zu der viskosen Polymerlösung wurden, bezogen auf PU-Feststoff 4 Gew.-% Titandioxid, 0,3 Gew.-% Mg-Sterat und 1 % des Siliconöls Baysilon M 100 (Bayer AG) zugesetzt. Die Lösung wurden in 6 gleiche Teile geteilt, und diesen die nachfolgend beschriebenen Stabilisator-Kombinationen zugesetzt.

Beispiel 9 1 % Cyanox 1790 (Formel I) (erfindungsgemäß)
2 % Stabilisator A (siehe Beispiel 1)

Beispiele 10 bis 14: Vergleichsversuche

Beispiel 10 1 % Cyanox 1790
2 % Weston DHOP
Beispiel 11 1% Cyanox 1790
2 % Weston 618 = Distearylpentaerythritdiphosphit
Beispiel 12 1 % Cyanox 1790
2 % Irgafos 168 = Tris(2.4-di-t-butylphenyl)phosphit
Beispiel 13 1 % Cyanox 1790

2 % Sandostab PEPQ = Tetrakis(2.4-di-t-butylphenyl)-4,4'-biphenylendiphosphonit

Beispiel 14 1% Cyanox 1790

2% Ultranox 626 = Bis(2.4-di-t-butylphenyl)-pentaerythritoldiphospit

Die nach den Beispielen hergestellten Lösungen wurden auf herkömmliche Art zu einem multifilen Faden vom Gesamttiter 160 dtex versponnen.

Die Fäden wurden anschließend zu einem Strickschlauch verstrickt und das Gestrick einer sauren Aufhellung unterzogen. Die saure Aufhellung stellt einen typischen Nachbehandlungsschritt dar, dem Mischartikel aus Elasthan und Polyamid unterworfen werden.

Die saure Aufhellung wurde in üblicher Weise mit einer Flotte, die 1,8 Gew.-% eines anionischen Aufhellers und 3 g/l Na-Dithionit enthielt und auf pH 5 eingestellt war, durchgeführt. Die Ware wurde bei 40° in die Flotte eingebracht, die Flotte auf 90° erhitzt und 60 min bei dieser Temperatur belassen. Die Ware wurde dann entnommen, warm und kalt gespült und bei 70°C getrocknet.

Die Strickwaren wurden nun wieder den Schadgastets nach DIN 45 025 bzw. dem in Beispiel 5 bis 8 beschriebenen Test unterzogen. Ebenfalls geprüft wurde die Lichtechtheit nach dem Fade-o-meter-Test.

**Tabelle 2: Licht- und Abgasechtheiten**

| Beispiel | Lichtechtheit | 1 x NO | 3 x NO | $NO_2$ bei 60° |
|---|---|---|---|---|
| 9 erfindungsgemäß | 2 [1] | 4-5 [1] | 4-5 [1] | 2-3 [1] |
| 10 Vergleich | 1-2 [6] | 4-5 [1] | 4 (-5) [2] | 2 [2] |
| 11 Vergleich | 1-2 [3] | 4-5 [1] | 4 [3] | 1-2 [3] |
| 12 Vergleich | 1-2 [5] | 4 (-5) [5] | (3-) 4 [4] | 1-2 [3] |
| 13 Vergleich | 1-2 [3] | 4 [6] | 3-4 [6] | 1-2 [3] |
| 14 Vergleich | 2 [2] | 4-5 [1] | (3-) 4 [4] | 1-2 [3] |

Die Bewertung der Lichtechtheit erfolgte nach einer Belichtungszeit von 29 Standard-Fade-o-meter-Stunden.

Die Zahlen in eckiger Klammer geben die Reihenfolge der Bewertung an von: 1 = beste Probe bis 6 = schlechteste Probe.

Die Beurteilung der Farbänderungen nach NO-Behandlung erfolgte wie in Beispiel 5 bis 8 beschrieben.

## Patentansprüche

**1.** Elasthanfäden und -fasern, die ein phenolisches Antioxidans und einen Phosphitstabilisator enthalten, dadurch gekennzeichnet, daß in dem Stabilisatorgemisch

a) das phenolische Antioxidans der Formel (I) entspricht und seine Menge im Stabilisatorgemisch 15 bis 70 Gew.-% beträgt,

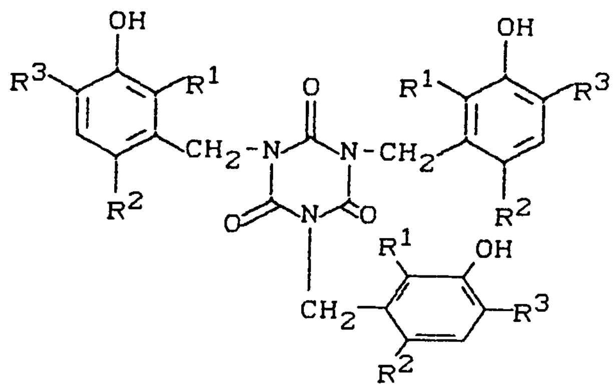

(I)

worin in der Formel (I)

$R^1$, $R^2$ und $R^3$ $C_{1-3}$-Alkylreste und $R^3$ außerdem $C_{4-6}$-Alkylreste darstellen

und

b) die Phosphitstabilisatoren oligomere, (cyclo)aliphatische Phosphorigester sind, die durch Umesterung von Pentaerythrit, Perhydrobisphenol A, gegebenenfalls in Gegenwart eines aliphatischen Monoalkohols mit 6 bis 18 C-Atomen, mit monomeren Trialkyl- oder Triarylphosphiten erhalten werden, wobei die oligomeren Phosphite Gemische von oligomeren Phosphiten sind, denen überwiegend die Struktur

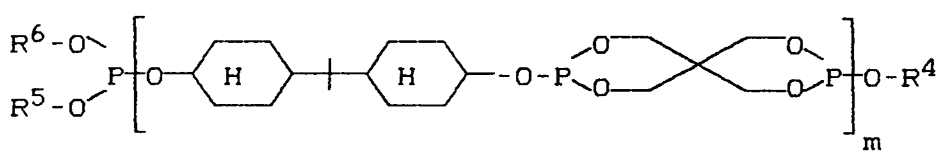

zukommt,

worin

$R^4$, $R^5$ und $R^6$ gleich oder verschieden sein können und $C_{1-18}$-Alkyl, ein Rest der Struktur

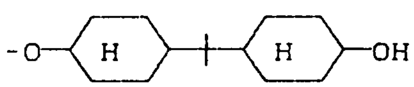

,

$R^4$ außerdem einen Rest der Struktur

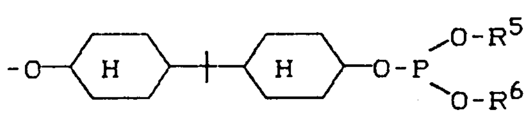

$R^5$ und $R^6$ außerdem zusammen einen Rest der Struktur

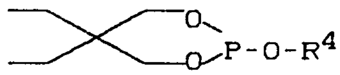

darstellen und

m eine ganze Zahl von 2 bis 20 bedeutet,

und zur Herstellung der Phosphitstabilisatoren b) die Komponenten

monomeres Trialkyl- oder Triarylphosphit,

Pentaerythrit,

Perhydrobisphenol und gegebenenfalls

aliphatischer Monoalkohol im Molverhältnis 1:0,75 bis 1,3:1,6 bis 3,2:0 bis 0,5 umgesetzt werden

und die Konzentration des phenolischen Antioxydans a) zwischen 0,5 und 2 Gew.-%

und die Konzentration des Phosphitstabilisators b) zwischen 1 und 5 Gew.-%, jeweils bezogen auf das Fasermaterial, liegt.

**2.** Elasthanfäden nach Anspruch 1, dadurch gekennzeichnet, daß in dem Stabilisatorgemisch im phenolischen Antioxydans a)
$R^1$ und $R^2$ $CH_3$ oder $C_2H_5$
$R^3$ $CH_3$, $C_2H_5$, $C_3H_7$ oder $C_4H_9$ sind

und in den oligomeren Phosphitstabilisatoren b) $R^4$, $R^5$ und $R^6$ Methyl, Ethyl, Propyl, Butyl, Isooctyl, Decyl, Dodecyl, Tetradecyl, Octadecyl,

$R^4$ außerdem den Rest

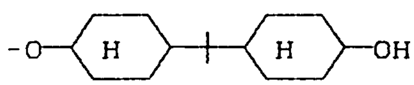

und

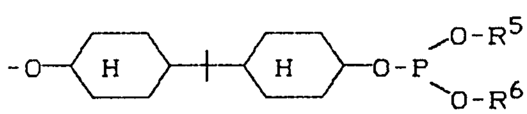

und $R^5$ und $R^6$ zusammen den Rest

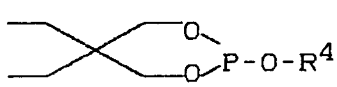

darstellen,

sowie m = 2 bis 15 ist.

3. Fasern und Fäden nach Ansprüchen 1 und 2, dadurch gekennzeichnet, daß die Konzentration des phenolischen Antioxidans a) im Stabilisatorgemisch zwischen 16,6 bis 50 Gew.-% liegt und die Konzentration des Phosphitstabilisators bezogen auf das Fasermaterial zwischen 1 und 3 Gew.-% liegt.

4. Fasern und Fäden nach Ansprüchen 1 bis 3, dadurch gekennzeichnet, daß das Elasthan auf Basis von Polyesterdiolen aufgebaut ist.

5. Fasern und Fäden nach Ansprüchen 1 bis 3, dadurch gekennzeichnet, daß das Elasthan auf Basis von Polyetherdiolen aufgebaut ist.

6. Fasern und Fäden nach Ansprüchen 1 bis 3, dadurch gekennzeichnet, daß das Elasthan auf Basis von Mischungen aus Polyester und Polyetherdiolen aufgebaut ist.

**Claims**

1. Elastane filaments and fibres which contain a phenolic antioxidant and a phosphite stabilizer, characterized in that in the stabilizer mixture

a) the phenolic antioxidant corresponds to formula (I) and its amount in the stabilizer mixture is 15 to 70 wt%.

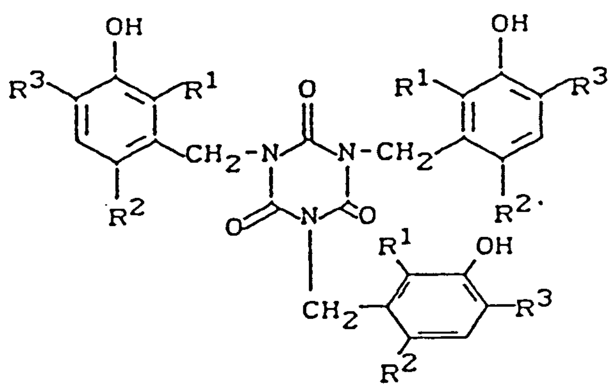

(I)

wherein in formula (I)

$R^1$, $R^2$ and $R^3$ represent $C_{1-3}$-alkyl groups and $R^3$ also represents $C_{4-6}$-alkyl groups

and

b) the phosphite stabilizers are oligomeric, (cyclo)aliphatic phosphorous esters that are obtained by transesterification of pentaerythritol and perhydrobisphenol A, optionally in presence of an aliphatic monoalcohol with 6 to 18 C-atoms, with monomeric trialkyl- or triarylphosphites, the oligomeric phosphites being mixtures of oligomeric phosphites predominantly of the structure

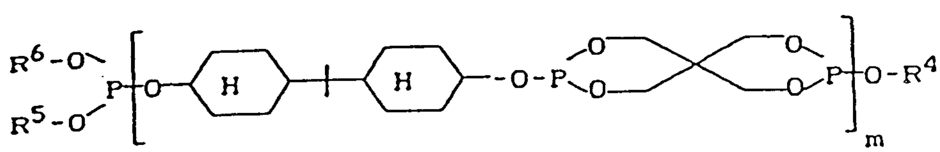

wherein

$R_4$, $R_5$ and $R_6$ can be the same or different and represent $C_{1-18}$-alkyl or a group of the structure

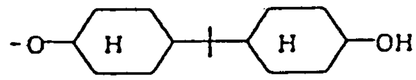

,

$R_4$ also represents a group of the structure

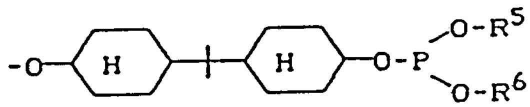

and $R_5$ and $R_6$ also together represent a group of the structure

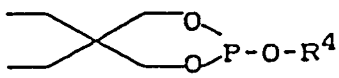

and

m represents a whole number from 2 to 20,

and to prepare the phosphite stabilizers b) the components

monomeric trialkyl or triaryl phosphite,

pentaerythritol,

perhydrobisphenol and optionally aliphatic monoalcohol are reacted in the molar ratio 1:0.75 to 1.3:1.6 to 3.2:0 to 0.5

and the concentration of the phenolic antioxidant a) is between 0.5 to 2 wt%

and the concentration of the phosphite stabilizer b) is between 1 and 5 wt%, in each case with reference to the fibre material.

**2.** Elastane filaments according to claim 1, characterized in that in the stabilizer mixture

in the phenolic antioxidant a)
$R^1$ and $R^2$ are $CH_3$ or $C_2H_5$,
$R^3$ is $CH_3$, $C_2H_5$, $C_3H_7$ or $C_4H_9$

and in the oligomeric phosphite stabilizers b) $R_4$, $R_5$ and $R_6$ represent methyl, ethyl, propyl, butyl, isooctyl, decyl, dodecyl, tetradecyl and octadecyl,

$R_4$ also represents the groups

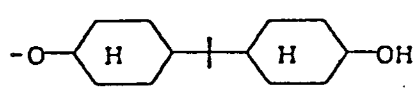

and

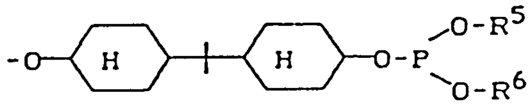

and $R_5$ and $R_6$ together represent the group

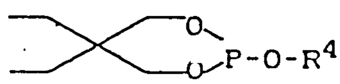

and also m = 2 to 15.

3. Fibres and filaments according to claims 1 and 2, characterized in that the concentration of the phenolic antioxidant a) in the stabilizer mixture is between 16.6 and 50 wt% and the concentration of the phosphite stabilizer referred to the fibre material is between 1 and 3 wt%.

4. Fibres and filaments according to claims 1 to 3, characterized in that the elastane is based on polyester diols.

5. Fibres and filaments according to claims 1 to 3, characterized in that the elastane is based on polyether diols.

6. Fibres and filaments according to claims 1 to 3, characterized in that the elastane is based on mixtures of polyester diols and polyether diols.

**Revendications**

1. Filaments et fibres d'élasthane contenant un antioxydant phénolique et un phosphite stabilisant, caractérisée en ce que, dans le mélange stabilisant
   a) l'antioxydant phénolique répond à la formule I

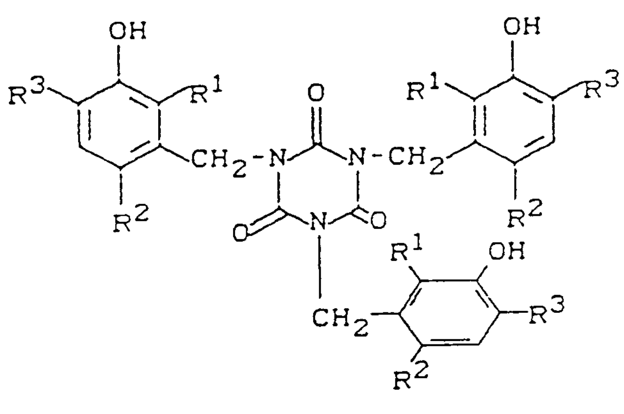

(I)

dans laquelle $R^1$, $R^2$ et $R^3$ représentent des groupes alkyle en $C_1$-$C_3$ et $R^3$ pouvant en outre représenter un groupe alkyle en $C_4$-$C_6$, et sa proportion dans le mélange stabilisant est de 15 à 70 % en poids, et
   b) les phosphites stabilisants sont des esters phosphoreux (cyclo)aliphatiques oligomères qui sont obtenus par transestérification du pentaérythritol, du perhydrobisphénol A, éventuellement en présence d'un monoalcool aliphatique en $C_6$-$C_{18}$, par des phosphites de trialkyle ou de triaryle monomères, les phosphites oligomères étant des mélanges de phosphites oligomères principalement de structure

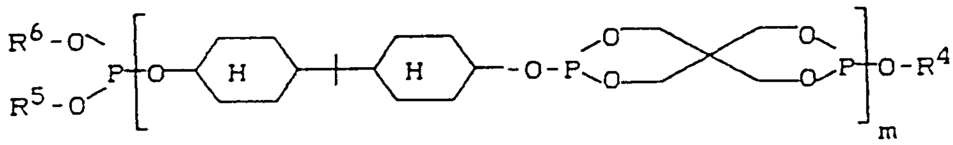

dans laquelle $R^4$, $R^5$ et $R^6$, qui peuvent avoir des significations identiques ou différentes, représentent chacun un groupe alkyle en $C_1$-$C_{18}$, un radical de structure

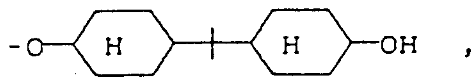

$R^4$ pouvant en outre représenter un radical de structure

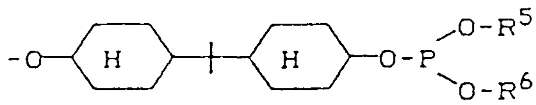

$R^5$ et $R^6$ pouvant en outre former ensemble un groupe de structure

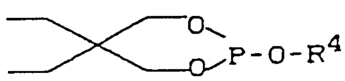

m est un nombre entier allant de 2 à 20,
et pour la préparation des phosphites stabilisants b), les composants phosphite de trialkyle ou de triaryle monomère,
pentaérythritol,
perhydrobisphénol et le cas échéant
monoalcool aliphatique,
ont été mis à réagir dans des proportions molaires de 1:0,75 à 1,3:1,6 à 3,2:0 à 0,5,
et la concentration de l'antioxydant phénolique a) est de 0,5 à 2 % en poids,
et la concentration du phosphite stabilisant b) est de 1 à 5 % en poids,
dans le deux cas par rapport à la matière fibreuse.

**2.** Filaments d'élasthane selon la revendication 1, caractérisés en ce que, dans le mélange stabilisant :
dans l'antioxydant phénolique a)
$R^1$ et $R^2$ représentent $CH_3$ ou $C_2H_5$
$R^3$ représente $CH_3$, $C_2H_5$, $C_3H_7$ ou $C_4H_9$
et dans les phosphites stabilisants oligomères b)
$R^4$, $R^5$ et $R^6$ représentent des groupes méthyle, éthyle, propyle, butyle, isooctyle, décyle, dodécyle, tétradécyle, octadécyle,
$R^4$ peut représenter en outre le groupe

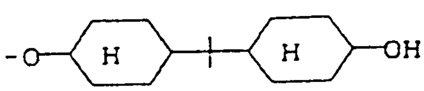

et

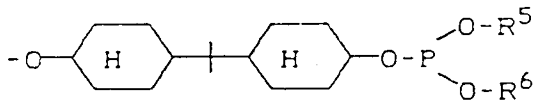

et $R^5$ et $R^6$ peuvent former ensemble le groupe

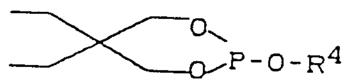

et m = 2 à 15.

**3.** Fibres et filaments selon les revendications 1 et 2, caractérisés en ce que la concentration de l'antioxydant phénolique a) dans le mélange stabilisant est de 16,6 à 50 % en poids et la concentration du phosphite stabilisant, par rapport à la matière fibreuse, est de 1 à 3 % en poids.

**4.** Fibres et filaments selon les revendications 1 à 3, caractérisés en ce que l'élasthane a été préparé par synthèse à base de polyester-diols.

**5.** Fibres et filaments selon les revendications 1 à 3, caractérisés en ce que l'élasthane a été préparé par synthèse à base de polyéther-diols.

**6.** Fibres et filaments selon les revendications 1 à 3, caractérisés en ce que l'élasthane a été préparé par synthèse à base de mélanges de polyester- et de polyéther-diols.